# EUROPEAN PATENT APPLICATION

(11) **EP 2 604 547 A1**
(43) Date of publication of application: **19.06.2013**
(21) Application number: 11192916.2
(22) Date of filing: 12.12.2011
(51) Int. Cl.: B65D 85/804

(54) **A capsule for descaling a beverage preparation machine**

(71) Applicant: Nestec S.A., 1800 Vevey (CH)
(72) Inventor: FRAGNIERE, Frédéric, 1373 CHAVORNAY (CH); Fragniere, Fréderic, 1373 Chavornay (CH)

(57) **Abstract**

The present invention is directed to a capsule (1) for use in a beverage preparation machine (11) having means for injecting a fluid in said capsule, said capsule comprising a capsule body with capsule side walls (2) for containing a composition (9) to be dissolved and/or extracted by said fluid, said capsule body comprising a dispensing opening (5), characterized in that said composition is a descaling composition (9).

## Description

### Field of the invention

The present invention concerns a capsule for descaling a beverage preparation machine. It also relates to a descaling method that involves the use of such a descaling capsule.

### Background of the invention

Beverage preparation machines are well known in the food science and consumer goods area. Such machines allow a consumer to prepare at home a given type of beverage, for instance a coffee-based beverage, e.g.an espresso or a brew-like coffee cup.

Today, most beverage preparation machines for in-home beverage preparation comprise a system made of a machine which can accommodate portioned ingredients for the preparation of the beverage. Such portions can be soft pods or pads, or sachets, but more and more systems use semi-rigid or rigid portions such as rigid pods or capsules. In the following, it will be considered that the beverage machine of the invention is a beverage preparation machine working a rigid capsule, although this should be not considered a limiting disclosure.

The machine comprises a body and dispensing head attached to said body. The dispensing head comprises a receptacle for accommodating said capsule. A fluid injection system is disposed inside the machine head, for injecting a fluid - preferably water - under pressure into said capsule. Water injected under pressure in the capsule, for the preparation of a coffee beverage according to the present invention, is preferably hot, that is to say at a temperature above 70°C. However, in some particular instances, it might also be at cold/ambient temperature. By "cold or ambient" temperature water, it is meant water which has a temperature comprised between 4°C and 35°C, preferably between 10°C and 20°C.

The pressure inside the capsule chamber during extraction and/or dissolution of the capsule contents is typically about 1 to 6 bar for dissolution products, 2 to 12 bar for extraction of roast and ground coffee. Such a preparation process differs a lot from the so-called "brewing" process of beverage preparation - particularly for tea and coffee, in that brewing involves a long time of infusion of the ingredient by a fluid (e.g. hot water), whereas the beverage preparation process allows a consumer to prepare a beverage, for instance coffee within a few seconds.

The principle of extracting, infusing, and/or dissolving the contents of a closed capsule under pressure is known and consists typically of confining the capsule in a receptacle of a machine, injecting a quantity of pressurized water into the capsule, generally after piercing a face of the capsule with a piercing injection element such as a fluid injection needle mounted on the machine, so as to create a pressurized environment inside the capsule either to extract the substance or dissolve it, and then release the extracted substance or the dissolved substance through the capsule. Capsules allowing the application of this principle have already been described for example in applicant's European patent n° EP 1 472 156 B1**,** and in EP 1 784 344 B1**.**

Machines allowing the application of this principle have already been described for example in patents CH 605 293 and EP 242 556**.** According to these documents, the machine comprises a receptacle for the capsule and a perforation and injection element made in the form of a hollow needle comprising in its distal region one or more liquid injection orifices. The needle has a dual function in that it opens the top portion of the capsule on the one hand, and that it forms the water inlet channel into the capsule on the other hand.

The machine further comprises a fluid reservoir ("reservoir") - in most cases this fluid is water - for storing the fluid that is used to dissolve and/or infuse and/or extract under pressure the ingredient(s) contained in the capsule. The machine comprises a heating element such as a boiler or a heat exchanger, which is able to warm up the water used therein to working temperatures (classically temperatures up to 80-90°C). Finally, the machine comprises a pump element for circulating the water from the reservoir to the capsule, optionally though the heating element. Fluid reservoir, heating element, pump element, are usually located within the machine body, and are linked to the dispensing head with a fluid circuit.

The way the water circulates within the machine is selected via a selecting valve means, such as for instance a peristaltic valve of the type described in applicant's European patent application EP 2162653 A1**.**

When the beverage to be prepared is coffee, one interesting way to prepare the said coffee is to provide the consumer with a capsule containing roast and ground coffee powder, which is to be extracted with hot water injected therein.

Capsules have been developed for such an application, which are described and claimed in applicant's European patent EP 1 784 344 B1**,** or in European patent application EP 2 062 831**.**

In short, such capsules comprise typically:
- a hollow body and an injection wall which is impermeable to liquids and to air and which is attached to the body and adapted to be punctured by e.g. an injection needle of the machine,
- a chamber containing a bed of roast and ground coffee to be extracted,
- an aluminum membrane disposed at the bottom end of the capsule, closing the said capsule, for retaining the internal pressure in the chamber, the said membrane being associated with piercing means for piercing dispensing holes in the said aluminum membrane when said internal pressure inside the chamber reaches a certain predetermined value,
- optionally, means configured to break the jet of fluid so as to reduce the speed of the jet of fluid injected into the capsule and distribute the fluid across the bed of substance at a reduced speed.

Beverage preparation machines and capsules as described above, for many of them, are designed to give the consumer the choice of preparing the beverage she/he likes amongst a whole range of beverage products.

In the range of beverages that is proposed to the consumer, some correspond to large cups typically having a volume of 200 ml or above, for instance Caffee Crema Grande, latte macchiatos, cappuccinos, chococinos, American brew-like coffees, or the like. Some other beverages correspond to mid-size cups typically between 100 and 200 ml, like for instance teas, herbal infusions, Chai tea, tea latte, or chocolate-based preparations such as Nesquik®. Finally, some correspond to small serving size, typically below 100 ml, such as for instance espressos, ristretto, or cortado coffee.

After a certain number of uses, due to the fact that beverage preparation machines typically use mineralized water for the extraction, such as tap water or mineral water, the fluid circuit pipes of the machine as well as its functional elements in contact with the water (e.g. pump, heating element, injection needle), the machine can be clogged by minerals deposits. This is of course highly undesirable as the machine performance decreases, and said machine can even be damaged or stop working.

Various descaling products are available on the market that allow the consumer to regularly perform a descaling process and maintain their machine in its highest performance state. Such products, in powder, liquid, or gel form have a disadvantage as they require manually dosing the product to be used, which is dangerous for the consumer who has to manipulate a corrosive composition. In order to decrease the risk for the consumer, some products have been marketed which are in tablet form, which the consumer can drop in the machine reservoir and mix with a certain amount of water. However, such a solution still requires some handling of a corrosive composition, even in solid tablet form, which is undesirable. Moreover, the dissolution of a tablet can take some time, and in some instances, it is incomplete, thereby reducing the efficiency of the descaling process.

There is a need for a descaling system that solves the above mentioned disadvantages, and in particular, which is easy and clean to use, which restricts the manipulation by the consumer to a minimum, and prevents direct contact with the descaling composition, while guaranteeing a high efficacy.

### Summary of the invention

The objectives set out above are met with a capsule for use in a beverage preparation machine having means for injecting a fluid in said capsule, said capsule comprising a capsule body with capsule side walls for containing a composition to be dissolved and/or extracted by said fluid, said capsule body comprising a dispensing opening characterized in that said composition is a descaling composition.

In a highly preferred embodiment of the invention, the capsule comprises a filter. This filter has a mesh diameter sufficient to retain mineral particles, such as calcium crystals for instance, so that the descaling liquid prepared from the capsule and passed through the machine is filtered, and substantially free of solid particles in case it would be reused for another descaling cycle.

Advantageously, said filter is located within the capsule between the descaling composition and the dispensing opening of said capsule. Alternatively, the filter can be placed advantageously between the top wall of the capsule and the compartment of the capsule that contains the descaling agent.

In a preferred embodiment of the invention, the descaling composition contained inside the capsule is a powder, at least one compacted tablet, a gel, a liquid, or a combination thereof.

In one possible embodiment of the invention, the capsule comprises top and bottom walls which are sealed to the side walls, so that it is completely sealed in a gas and moisture tight manner.

In the latter case, the top wall can be a pierceable membrane adapted to be pierced by the fluid injection means of the machine, and the bottom wall can comprise a bottom membrane sealed on the inner surface of the capsule side walls and a piercing element disposed outside of the capsule compartment that is adapted to pierce the bottom membrane when fluid pressure inside the capsule compartment increases.

Alternatively, the top wall can be a pierceable membrane adapted to be pierced by the fluid injection means of the machine, and the bottom wall can be a peelable membrane sealed onto the side walls in the vicinity of the dispensing opening.

The present invention further relates to a method of descaling a beverage preparation machine, characterized in that said method comprises at least the following method steps, in order:
(i) inserting a descaling capsule according to any of the preceding claims 1 to 7 in the brewing chamber of said machine,
(ii) filling the reservoir of the machine with fresh tap water, mineral water or demineralised water,
(iii) extracting water through said capsule with water, into a container placed below the dispensing opening of the machine, until the reservoir is empty,
(iv) pouring the extracted descaling liquid into the reservoir,
(v) extracting the descaling liquid again, with the machine set on "hot water extraction" during at least part of the extraction of the reservoir contents,
(vi) waiting between 1 and 10, preferably between 3 and 7 minutes, then
(vii) removing the used capsule from the machine,
(viii) discarding the used descaling solution and filling the reservoir with fresh water,
(ix) extracting part - preferably about half - of the volume of the reservoir with cold/ambient water, and part with hot water, then discarding the used rinsing water.

Preferably, the extraction volume in step (iii) is comprised between 100 and 500ml, preferably between 200 and 300 ml.

### Brief description of the drawings

Additional features and advantages of the present invention are described in, and will be apparent from, the description of the presently preferred embodiments which are set out below with reference to the drawings in which:
**Figure 1** is a split perspective schematic view of a descaling capsule;
**Figures 2 to 14** are schematic views illustrating a beverage preparation machine with which method steps to complete a descaling process are performed, according to the invention.

### Detailed description of the invention

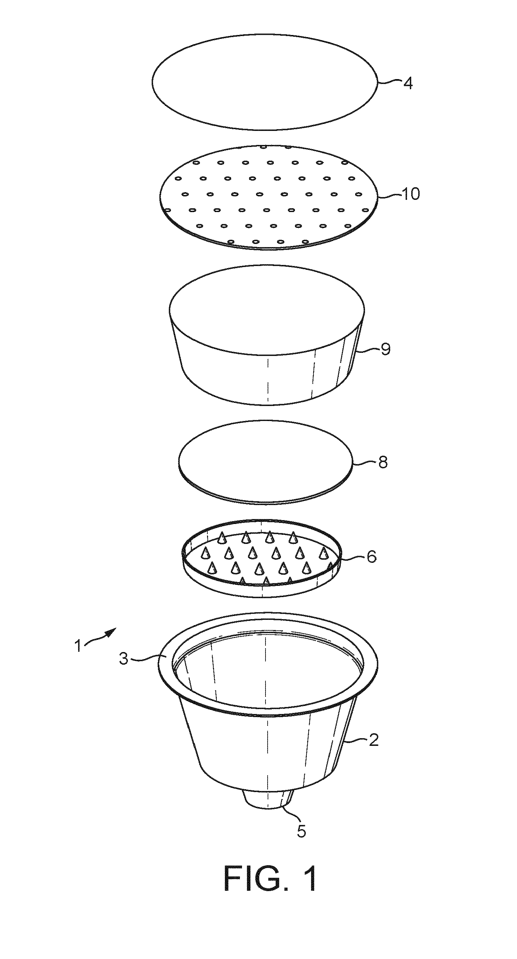

One embodiment of a descaling capsule according to the invention is illustrated in **figure 1****.**

The capsule 1 comprises a capsule body having side walls 2 and top edge 3 onto which a top wall 4 is sealed. The top wall 4 is a pierceable membrane, made of a laminated multilayer film having gas and moisture barrier properties and having at least one of its layers which is an elastic material such that said membrane can reclose after a fluid injection needle of the beverage preparation machine has been removed therefrom. The side walls 2 are made of gas and moisture barrier thermoplastic material which is thermoformed into a cup-shaped body.

In the centre of the bottom portion of the capsule body, is a dispensing opening 5 through which the liquid prepared inside the capsule can flow.

Inside the capsule body, at the bottom, a piercing plate 6 is disposed, which comprises small pyramid-shaped protrusions 7 across its upper surface. On top of the piercing plate 6 is an aluminium membrane 8, which is sealed onto the inner surface of the side walls 2. The aluminium membrane 8 is sufficiently flexible to deform downwards when fluid is injected inside the capsule under pressure, and such that when fluid pressure inside the capsule reaches a certain value, the membrane 8 contacted the pyramids 7 of the piercing plate 6 and is pierced by said pyramids. This causes the fluid inside the capsule 1 to flow out through the dispensing opening 5.

Inside the closed compartment defined by the side walls 2, the top wall 4, and the aluminium membrane 8, is a descaling ingredient 9, meant to be dissolved by the fluid injected inside the capsule. The fluid injected therein is water, which can be hot or at ambient temperature.

The descaling ingredient 9 is in powder form. It could however by a concentrated liquid or a gel, or in any other physical state easy to dissolve with water within a few seconds. The descaling ingredient used can be a mixture of about 99.5% by weight of sulphamic acid, and about 0.5% of an amine-based inhibitor. Alternatively, the descaling composition can be a mixture of 85-90% by weight of sulphamic acid and 10 to 15% of citric acid. In some instances, it is possible to add other ingredients to the composition, such as a buffer, or some ingredients to help stabilize the composition when it is a powdered state.

Between the descaling ingredient 9 and the top wall membrane 4, is a filter 10. The filter 10 is made of a thermoplastic film which is pierced with a plurality of small holes, of a diameter sufficient to let liquid through, but able to retain small solid particles having a diameter of more than 200 microns.

According to the invention, one embodiment of a method for descaling a beverage preparation machine is as follows.

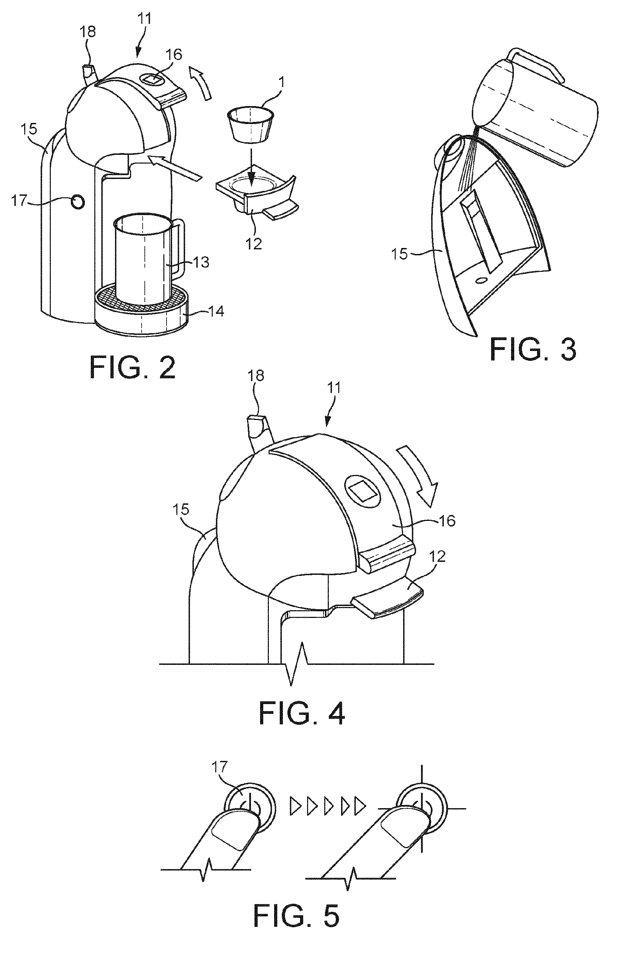

The user first loads the beverage preparation machine 11, as illustrated in **figure 2****,** with a descaling capsule 1 according to the invention. As shown, the capsule 1 can be first placed into a capsule holder 12, which is then inserted inside the machine brewing head, as illustrated in **figure 2****.** The user places on the cup tray 13 of the machine, a container 14 having a sufficient volume - for instance 500ml -, which will be filled with the descaling solution prepared from the descaling capsule 1.

The user then fills the machine reservoir 15 with a fresh water volume, for instance 400ml, as illustrated in **figure 3****.**

The user then closes the machine brewing head by actuating a opening/closing lever 16, as illustrated in **figure 4****,** and then switches the machine "on" by pressing the switch button 17, as shown in **figure 5****.** In order to perform a descaling process according to the invention, the machine can be turned "on" as usual for any kind of extraction, by pressing briefly onto the switch button 17, or alternatively, it can be turned "on" in a descaling mode, if one is available in the machine program, by pressing the switch button 17 during a few seconds as illustrated in **figure 5****,** until the switch button 17 blinks.

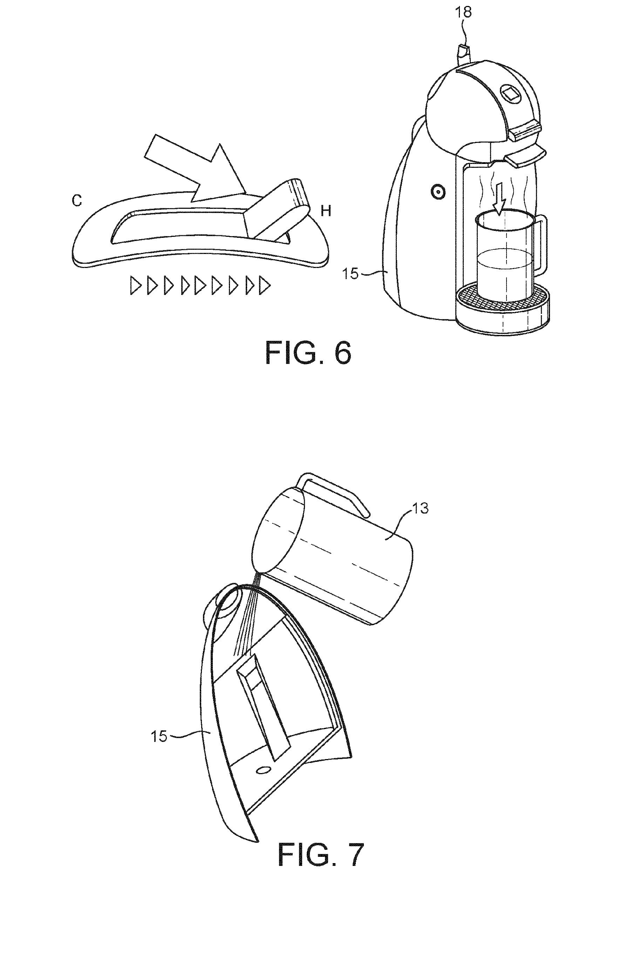

As shown in **figure 6****,** the user then starts the machine with hot water by switching the water pump actuating lever 18 in the hot position "H". Water is pumped from the reservoir 15, through the machine heating system, to the brewing head, where said heated water is injected inside the capsule under pressure, and is mixed therein with the descaling powder to prepare a hot liquid descaling solution which is then dispensed inside the container 13.

Once the reservoir is empty, and all of the water contained therein has been extracted through the capsule into a hot descaling solution, the latter is poured from the container 13 into the reservoir 15 of the machine, as illustrated in **figure 7****.** At this time, the consumer does not have to contact the descaling solution directly which is a clear advantage of the present invention.

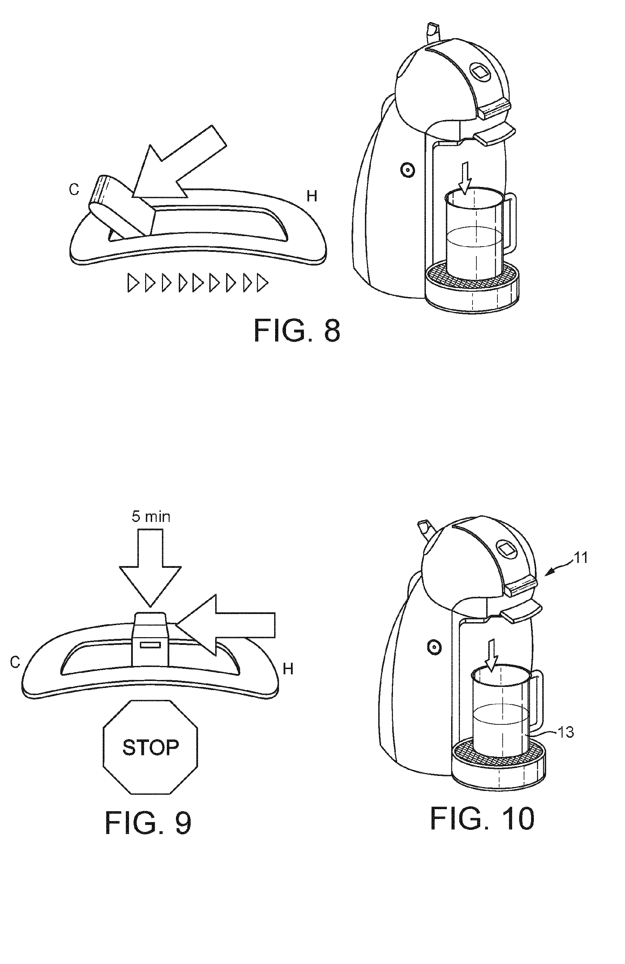

The user then starts a descaling extraction by selecting the position of the water pump actuating lever 18 in the cold water "C" position for half of the reservoir volume, as shown in **figure 8****.** And then the user finishes to extract the rest of the reservoir volume on the hot position "H" of the actuating lever 18, as shown in **figure 6****,** to ensure that also the heating element of the machine is cleaned with the descaling solution. The hot descaling solution contained in the reservoir then passes through the whole fluid system of the machine and performs a descaling process through the functional parts of the machine, including the heating element of the machine as described above. This solution passes through the capsule contained and is filtered by passing through the filter 10 of the capsule. All solid elements, typically solid minerals which were cleaned by the descaling solution from the pipes and functional elements of the machine during the descaling process are therefore retained inside the capsule. Only the liquid part of the descaling solution is then delivered to the container 13 as illustrated in **figure 8****.** The user then places the water pump actuating lever on the neutral/stop position for about 5 minutes, as illustrated in **figure 9****.** This gives sufficient time for the descaling solution which is now within the pipes and functional elements of the machine to descale and clean, in particular by dissolving the mineral solids, for instance the calcic salts and fresh water limestone.

At this point, the container 13 is full of hot descaling solution, as illustrated in **figure 10****.** The user can then perform a new descaling process by repeating the descaling extraction steps described in the last paragraph above.

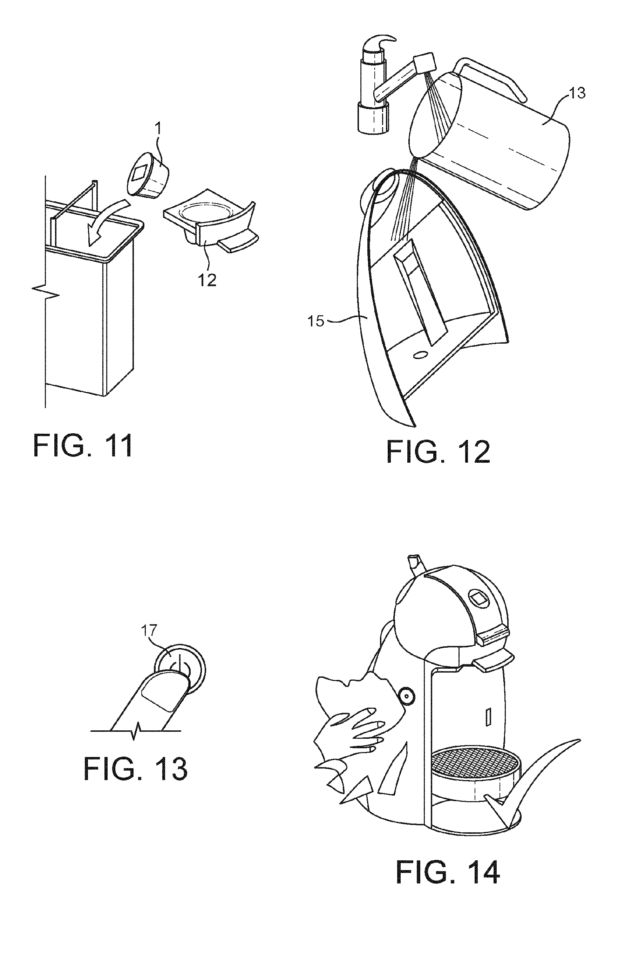

Or alternatively, the user can start the rinsing step by opening the machine brewing head, removing the capsule holder therefrom, and throwing the empty descaling capsule away, as illustrated in **figure 11****.**

The descaling solution contained in the container 13 is then thrown away, the container 13 is placed back on the cup tray 14, and the user fills the reservoir of the machine with fresh water, as illustrated in **figure 12****.** The user then starts an extraction by switching the lever 18 alternatively in hot, then cold positions, to ensure that all functional elements and pipes of the machine are rinsed. The fluid extracted into the container 13 must be discarded, and the reservoir filled with fresh water. The rinsing steps above can be repeated once, or several times if necessary.

The user finally switches the machine "off" by pressing on the switch button 17 as illustrated in **figure 13****,** and cleans the outside of the machine as shown in **figure 14****,** to complete the cleaning procedure. The machine is then fully cleaned inside and outside and can be used for a new series of beverage preparations.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A capsule (1) for use in a beverage preparation machine (11) having means for injecting a fluid in said capsule, said capsule comprising a capsule body with capsule side walls (2) for containing a composition (9) to be dissolved and/or extracted by said fluid, said capsule body comprising a dispensing opening (5), **characterized in that** said composition is a descaling composition (9).

2. A capsule (1) according to claim 1, which comprises a filter (10).

3. A capsule (1) according to claim 2, wherein said filter (10) is located between said composition (9) and said dispensing opening (5).

4. A capsule (1) according to any of the preceding claims 1 to 3, wherein said descaling composition (9) is a powder, at least one compacted tablet, a gel, a liquid, or a combination thereof.

5. A capsule (1) according to any of the preceding claims 1 to 4, which comprises top (4) and bottom (8) walls which are sealed to the side walls (2), so that it is completely sealed in a gas and moisture tight manner.

6. A capsule (1) according to claim 5, wherein said top wall (4) is a pierceable membrane adapted to be pierced by the fluid injection means of the machine (11), and said bottom wall (8) comprises a bottom membrane sealed on the inner surface of the capsule side walls (2) and a piercing element (6, 7) disposed outside of the capsule compartment that is adapted to pierce the bottom membrane (8) when fluid pressure inside the capsule compartment increases.

7. A capsule (1) according to claim 5, wherein said top wall (4) is a pierceable membrane adapted to be pierced by the fluid injection means of the machine, and the bottom wall is a peelable membrane sealed onto the side walls in the vicinity of the dispensing opening (5).

8. A method of descaling a beverage preparation machine (11), **characterized in that** said method comprises at least the following method steps, in order:
(i) inserting a descaling capsule (1) according to any of the preceding claims 1 to 7 in the brewing chamber of said machine (11),
(ii) filling the reservoir (15) of the machine with fresh tap water, mineral water or demineralised water,
(iii) extracting water through said capsule (1) with water, into a container (13) placed below the dispensing opening (5) of the machine, until the reservoir (15) is empty,
(iv) pouring the extracted descaling liquid into the reservoir (15),
(v) extracting the descaling liquid again, with the machine set on "hot water extraction" during at least part of the extraction of the reservoir contents,
(vi) waiting between 1 and 10, preferably between 3 and 7 minutes, then
(vii) removing the used capsule (1) from the machine (11),
(viii) discarding the used descaling solution and filling the reservoir (15) with fresh water,
(ix) extracting part of the volume of the reservoir with cold/ambient water, and part with hot water, then discarding the used rinsing water.

9. A descaling method according to claim 8, wherein the extraction volume in step (iii) is comprised between 100 and 500ml, preferably between 200 and 300 ml.
